# EUROPEAN PATENT SPECIFICATION

(11) **EP 2 291 850 B1**
(45) Date of publication and mention of the grant of the patent: **17.12.2014**
(21) Application number: 09746986.0
(22) Date of filing: 15.05.2009
(51) Int. Cl.: F28D 15/04, G21C 1/02, G21C 3/04, G21C 15/06

(54) **HEAT PIPE NUCLEAR FUEL ELEMENT**
KERNBRENNELEMENT MIT WÄRMEROHR
ELEMENT DE COMBUSTIBLE NUCLEAIRE AVEC CALODUC

(30) Priority: 15.05.2008 US 152904
(43) Date of publication of application: 09.03.2011
(73) Proprietor: TerraPower LLC, Bellevue, WA 98004 (US)
(72) Inventor: AHLFELD, Charles, E., LaJolla, CA 92037 (US); GILLELAND, John Rogers, Kirkland, WA 98034 (US); HYDE , Roderick A ., Redmond, WA 98052 (US); ISHIKAWA, Muriel Y ., Livermore, CA 94550 -4921 (US); MCALEES , David G., Bellevue, WA 98006 (US); MYHRVOLD, Nathan, P., Bellevue, WA 98004 (US); WEAVER, Thomas, Allan, San Mateo, CA 94402 (US); WHITMER, Charles, North Bend, WA 98045 (US); WOOD, Jr., Lowell, L., Bellevue, WA 98004 (US)
(74) Representative: Harris, Ian Richard
(86) International application number: PCT/US2009/003028
(87) International publication number: WO 2009/139899

(56) References cited:
- WO-A2-2009/136971
- DE-A1- 1 539 689
- DE-A1- 2 142 744
- US-A- 3 607 631
- US-A- 4 604 785
- US-A- 5 684 848
- US-A1- 2008 069 289
- US-A1- 2008 069 289
- US-B1- 6 878 952

## Description

### BACKGROUND

The present application relates to nuclear fission fuel elements, and systems, applications, apparatuses, and methods related thereto.

DE 2142744 discloses fuel/breeder material in the form of spherical particles. The shape of the fuel/breeder material zone and of the fission gas plenum within the sheath is such that evaporated thermal transmission medium form within the hot zone condenses on the walls of the plenum and returns to the hot zone by gravity and/or capillary action.

DE 2142744 discloses a heat transport mechanism having capillaries in the inside of the tubular casing to accelerate transport of condensed sodium back to a fuel containing portion of a fuel rod.

US2008/0069289 discloses a nuclear fission reactor apparatus comprising a core open to an atmosphere containing a hydrogen or a hydrogen isotope material, said core consisting essentially of a powdered fissile metal hydride material that remains entirely within said core. A heat pipe cooling system includes heat pipes of standard 1 inch diameter tubes made of 316 stainless steel and containing a stainless steel screen positioned along the inside diameter of the pipe to act as a wick for the potassium working fluid.

### SUMMARY

The invention is defined in the claims.

Illustrative examples provide nuclear fission fuel elements, and systems, applications, apparatuses, and methods related thereto. Illustrative examples and aspects include, without limitation, nuclear fission fuel elements, heat pipe assemblies, heat pipes, methods of fabricating a nuclear fission fuel element, methods of fabricating a heat pipe assembly, and the like.

The foregoing summary is illustrative only and is not intended to be in any way limiting. In addition to the illustrative aspects, examples, and features described above, further aspects, examples, and features will become apparent by reference to the drawings and the following detailed description.

### BRIEF DESCRIPTION OF THE FIGURES

**FIG. 1A** is a perspective view in schematic form of an illustrative nuclear fission fuel element.
**FIG. 1B** is a perspective view in schematic form of details of the nuclear fission fuel element of **FIG. 1A****.**
**FIG. 2A** is a cutaway side plan view in schematic form of an illustrative nuclear fission fuel element.
**FIG. 2B** is a cutaway side plan view in schematic form of another illustrative nuclear fission fuel element.
**FIG. 2C** is a cutaway side plan view in schematic form of another illustrative nuclear fission fuel element.
**FIG. 2D** is a cutaway side plan view in schematic form of another illustrative nuclear fission fuel element.
**FIG. 3A** is a cutaway end plan view in schematic form of a portion of embodiments of the illustrative nuclear fission fuel elements of **FIGS. 2A-2D****.**
**FIG. 3B** illustrates details of the portion shown in **FIG. 3A****.**
**FIG. 4A** is a cutaway side plan view in schematic form of an illustrative heat pipe.
**FIG. 4B** is a cutaway side plan view in schematic form of another illustrative heat pipe.
**FIG. 4C** is a cutaway side plan view in schematic form of another illustrative heat pipe.
**FIG. 4D** is a cutaway side plan view in schematic form of another illustrative heat pipe.
**FIG. 5A** is a cutaway end plan view in schematic form of a portion of embodiments of the illustrative heat pipes of **FIGS. 4A-4D****.**
**FIG. 5B** illustrates details of the portion shown in **FIG. 5A****.**
**FIG. 5C** is a cutaway end plan view in schematic form of a portion of other embodiments of the illustrative heat pipes of **FIGS. 4A-4D****.**
**FIG. 6** is a cutaway side plan view in schematic form of a portion of other embodiments of the illustrative heat pipes of **FIGS. 4A-4D****.**
**FIG. 7A** is a flow chart of an illustrative method of fabricating a nuclear fission fuel element.
**FIGS. 7B-7H** are flow charts of details of portions of the flow chart of **FIG. 7A****.**
**FIG. 8A** is a flow chart of an illustrative method of fabricating a heat pipe assembly.
**FIGS. 8B-8G** are flow charts of details of portions of the flow chart of **FIG. 8A****.**

### DETAILED DESCRIPTION

In the following detailed description, reference is made to the accompanying drawings, which form a part hereof. In the drawings, similar symbols typically identify similar components, unless context dictates otherwise. The illustrative examples described in the detailed description, drawings, and claims are not meant to be limiting.

By way of overview, illustrative examples provide nuclear fission fuel elements, and systems, applications, apparatuses, and methods related thereto. Illustrative examples and aspects include, without limitation, nuclear fission fuel elements, heat pipe assemblies, heat pipes, methods of fabricating a nuclear fission fuel element, methods of fabricating a heat pipe assembly, and the like.

Still by way of overview and given by way of non-limiting examples, some examples may be provided as nuclear fission fuel elements that include at least one heat pipe disposed therein while some other examples may be provided as heat pipes with nuclear fission fuel material disposed therein.

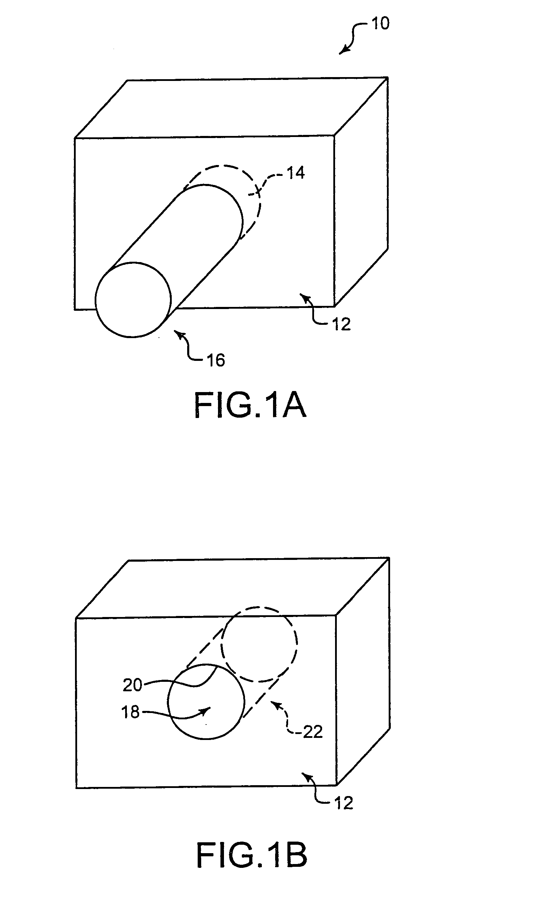

Still by way of overview and referring to FIGURE 1A, an illustrative nuclear fission fuel element 10 will be discussed by way of illustration and not limitation. The illustrative nuclear fission fuel element 10 suitably includes nuclear fission fuel material 12. At least a portion 14 (shown in phantom) of a heat pipe 16 is disposed within the nuclear fission fuel material 12.

No limitations whatsoever are intended regarding the nuclear fission fuel material 12. To that end, the nuclear fission fuel material 12 suitably may be any type of nuclear fission fuel material as desired for a particular application. As such, the nuclear fission fuel material 12 may be provided in the form of a metal, a compound, an alloy, or any combination thereof as desired. The nuclear fission fuel material 12 may be usable in any type of nuclear fission reactor whatsoever with any neutron spectrum whatsoever. For example, in some embodiments the nuclear fission fuel material 12 may be usable in nuclear fission reactors having a thermal neutron spectrum. In some other embodiments the nuclear fission fuel material 12 may be usable in nuclear fission reactors having a fast neutron spectrum.

Moreover, in some embodiments the nuclear fission fuel material 12 may be usable in breeder reactors. To that end, in some examples the nuclear fission fuel material 12 may include fissile material and/or fertile material. In such cases, the fissile material may include any one or more of ²³³U, ²³⁵U, and/or ²³⁹Pu, and the fertile material may include any one or more of ²³²Th and/or ²³⁸U.

Furthermore, no limitation whatsoever is intended regarding geometry of the nuclear fission fuel element 10. The geometric configuration shown in the drawing herein is used for illustrative purposes only. No limitation to any particular geometric configuration of the nuclear fission fuel element 10 is intended to be implied and, accordingly, none should be inferred.

Referring additionally to FIGURE 1B, a cavity 18 is defined in the nuclear fission fuel material 12. The cavity 18 is a passageway that is defined through at least the portion 14 of the nuclear fission fuel material 12. A surface 20 of the cavity 18 is a wall of the portion 14 (FIGURE 1A) of the heat pipe 16 (FIGURE 1A). The cavity 18 may be defined in any suitable manner. For example, in some examples the cavity 18 may be defined by machining the cavity from the nuclear fission fuel material 12 in any manner as desired, such as by drilling, milling, stamping, or the like. In some other examples the cavity 18 may be defined by forming at least a portion 22 of the nuclear fission fuel material 12 around a shape, such as without limitation a mandrel (not shown). The forming may be performed in any manner as desired, such as without limitation by welding, casting, electroplating, pressing, molding, or the like.

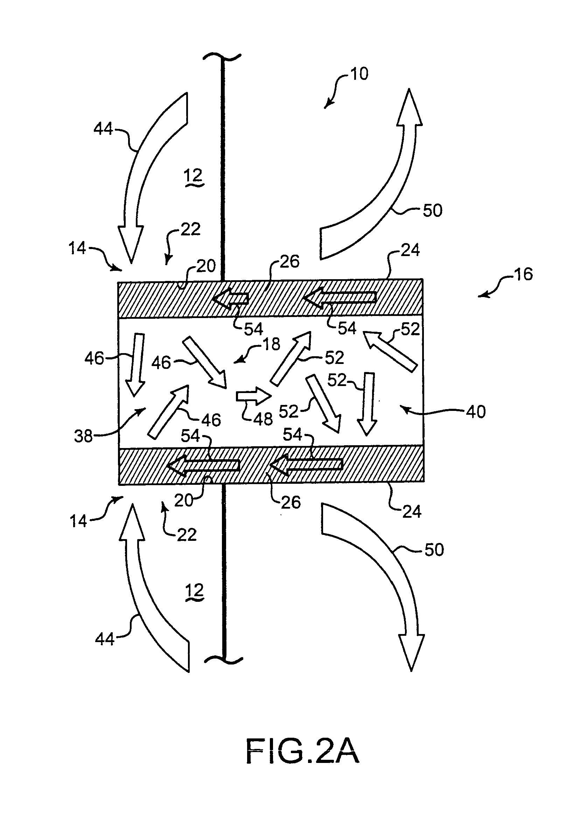

Referring now to FIGURES 2A-2D, a wall 24 of the heat pipe 16 extends from the cavity 18 in the nuclear fission fuel material 12, thereby substantially acting as an extension of the surface 20. As such, the cavity 18 can be considered to be substantially sealed. The wall 24 may be made of any suitable material as desired for high-temperature operations and/or, if desired, a neutron flux environment. Given by way of non-limiting example, in some examples the wall 24 may be made of any one or more of materials such as steel, niobium, vanadium, titanium, a refractory metal, and/or a refractory alloy. Given by way of non-limiting example, in some examples the refractory metal may be niobium, tantalum, tungsten, hafnium, rhenium, or molybdenum. Non-limiting examples of refractory alloys include, rhenium-tantalum alloys as disclosed in U.S. patent 6902809, tantalum alloy T-111, molybdenum alloy TZM, tungsten alloy MT-185, or niobium alloy Nb-1Zr.

A capillary structure 26 of the heat pipe 16 is defined within at least a portion of the cavity 18. That is, the surface 20 is a wall that surrounds a portion of the capillary structure 26. In some examples the capillary structure 26 may also be defined in an interior of the heat pipe 16 that is outside the nuclear fission fuel material 12 and enclosed by the wall 24.

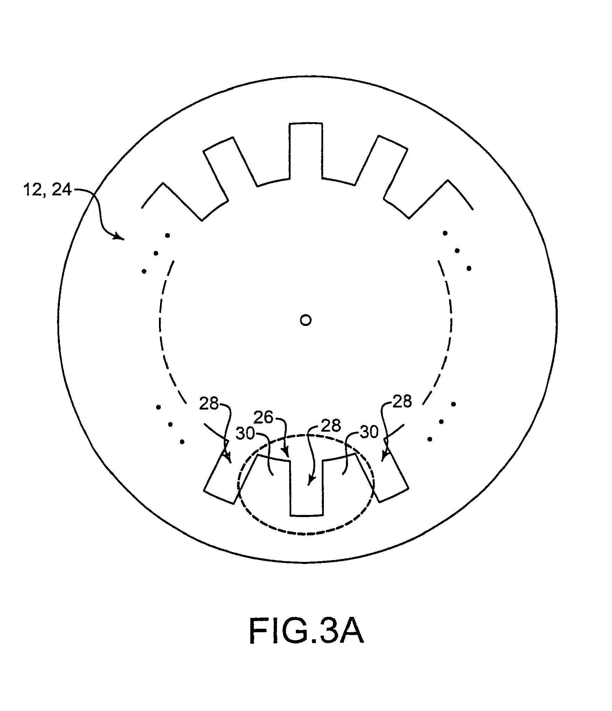

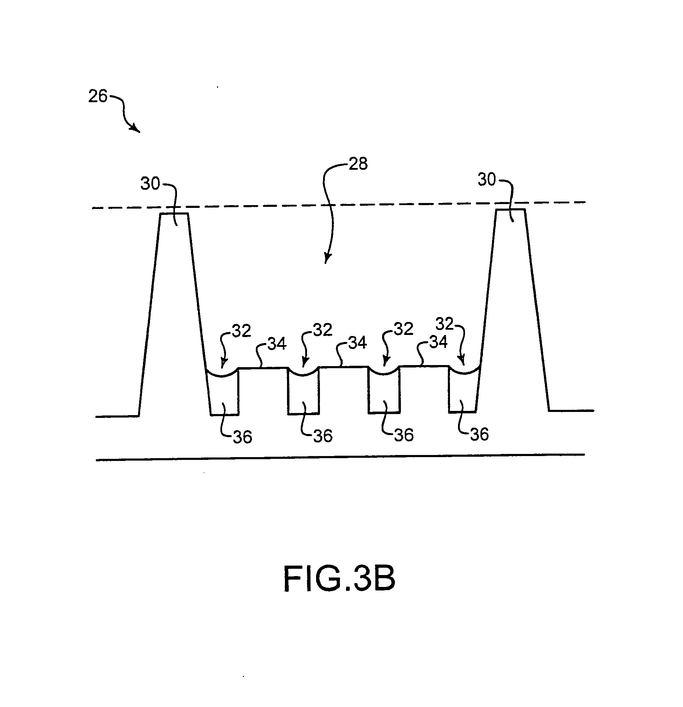

In some examples shown in FIGURES 3A and 3B, the capillary structure 26 is provided as axial grooves 28. The grooves 28 are separated by lands 30. In some examples, within the groove 28 are defined additional grooves 32. The grooves 32 may be separated from each other by two lands 34 or by one of the lands 30 and one of the lands 34. The grooves 28 and 32 may be defined by any suitable method as desired, such as without limitation machining, etching, casting, stamping, or the like.

Referring back to FIGURES 2A-2D and to FIGURE 3B, a working fluid 36 (FIGURE 3B) is provided within the heat pipe 16. The working fluid 36 suitably is evaporable and condensable. Given by way of non-limiting examples, the working fluid 36 may include any suitable working fluid as desired, such as without limitation ⁷Li, sodium, potassium, or the like.

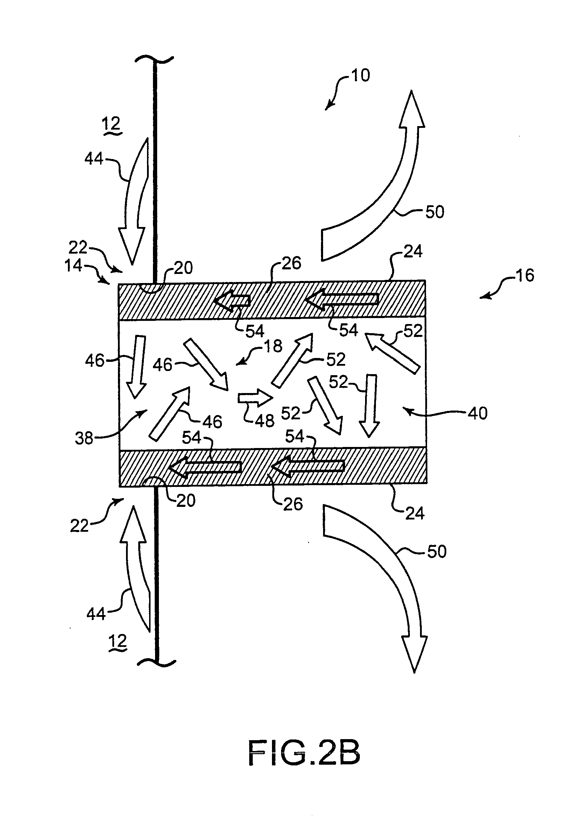

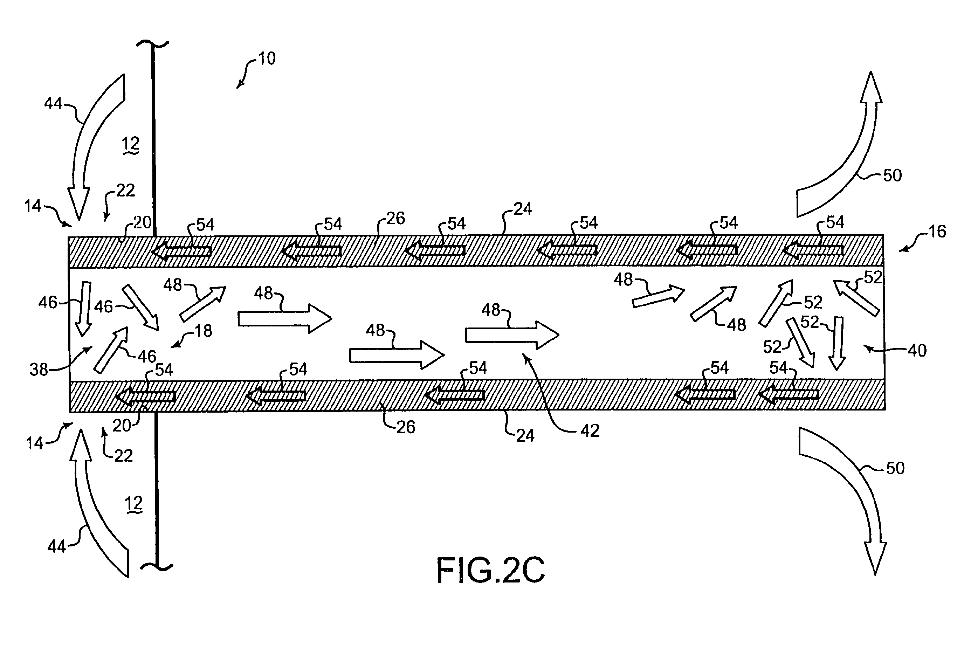

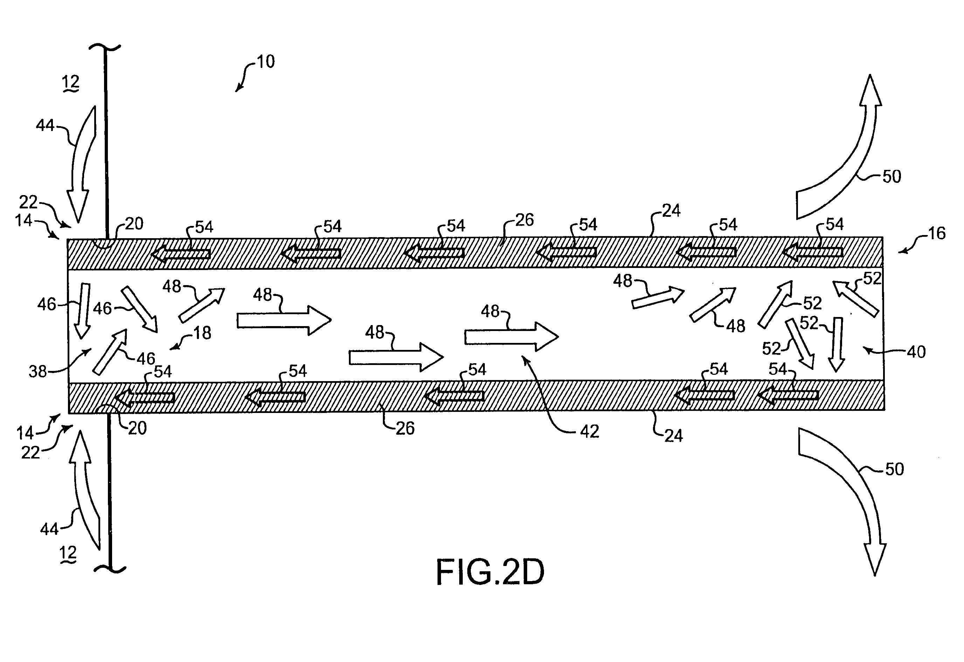

Referring to FIGURES 2A-2D, the heat pipe 16 includes an evaporator section 38 and a condenser section 40. In some examples and as shown in FIGURES 2A and 2C, the evaporator section 38 may be disposed entirely or substantially within the nuclear fission fuel material 12. However, it will be appreciated that the evaporator section 38 need not be disposed entirely or substantially within the nuclear fission fuel material 12. To that end, in some other examples and as shown in FIGURES 2B and 2D, at least a portion of the evaporator section 38 is not within the nuclear fission fuel material 12. As shown in FIGURES 2A-2D, in some examples the condenser section 40 may be disposed entirely external to the nuclear fission fuel material 12. However, in some other examples (not shown) a portion of the condenser section 40 may be disposed within the nuclear fission fuel material 12 and at least a portion of the condenser section 40 is not within the nuclear fission fuel material 12.

In some examples and referring now to FIGURES 2C and 2D, the heat pipe 16 may also include an adiabatic section 42. As shown in FIGURES 2C and 2D, in some examples the adiabatic section 42 may be disposed entirely external to the nuclear fission fuel material 12. However, in some other examples (not shown) a portion of the adiabatic section 42 may be disposed within the nuclear fission fuel material 12 and at least a portion a portion of the adiabatic section 42 is not within the nuclear fission fuel material 12.

Referring now to FIGURES 2A-2D, heat from the nuclear fission fuel material 12 is transferred to the evaporator section 40 as indicated by arrows 44. The working fluid 36 in the evaporator section 38 evaporates, as indicated by arrows 46, thereby undergoing phase transformation from a liquid to a gas. The working fluid 36 in gaseous form moves through the heat pipe 16, as indicated by arrows 48, from the evaporator section 38, when applicable (in some embodiments) through the adiabatic section 42 (FIGURES 2C and 2D), and to the condenser section 40. At the condenser section 40, heat from the working fluid 36 is transferred out of the heat pipe 16, as indicated by arrows 50. The working fluid 36 in the condenser section 40 condenses, as indicated by arrows 52, thereby undergoing phase transformation from a gas to a liquid. The working fluid 36 in liquid form returns from the condenser section 40 to the evaporator section 38, as indicated by arrows 54, via capillary action in the capillary structure 26. When applicable, in some embodiments the working fluid 36 in liquid form returns from the condenser section 40 through the adiabatic section 42 (FIGURES 2C and 2D) to the evaporator section 38.

Referring back to FIGURES 1A, 1B, and 2A-2D, the assembly shown in FIGURES 1A, 1B, and 2A-2D is a heat pipe assembly that includes the heat pipe 16 and the nuclear fission fuel material 12. As described above, the nuclear fission fuel material 12 is integral with the heat pipe 16 and is disposed in thermal communication with the heat pipe 16. That is, the nuclear fission fuel material 12 defines the cavity 18 therein and at least the portion 14 of the heat pipe 16 is disposed within the cavity 18.

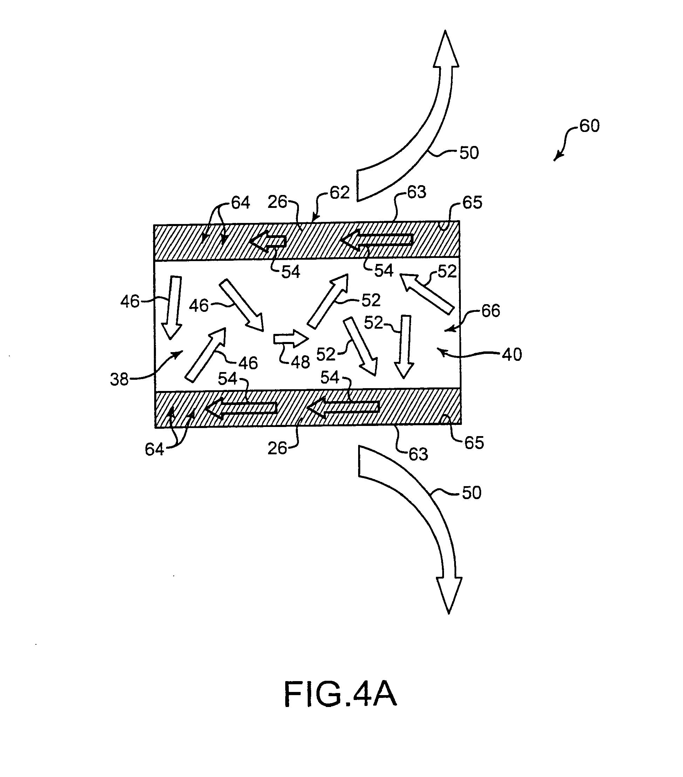

Referring now to FIGURES 4A-4D, in some other embodiments a heat pipe assembly 60 includes a heat pipe device 62. The heat pipe device 62 includes a wall section 63. As will be discussed below, nuclear fission fuel material 64 is integral with the heat pipe device 62 and is disposed in thermal communication with the heat pipe device 62. The nuclear fission fuel material 64 suitably is similar to the nuclear fission fuel material 12 (FIGURES 1A, 1B, and 2A-2D) described above, and details need not be repeated.

Examples of the heat pipe assembly 60 share some features in common with the nuclear fission fuel element 10 (FIGURES 1A, 1B, 2A-2D, 3A, and 3B). Common reference numbers will be used to refer to common features, and details need not be repeated for an understanding.

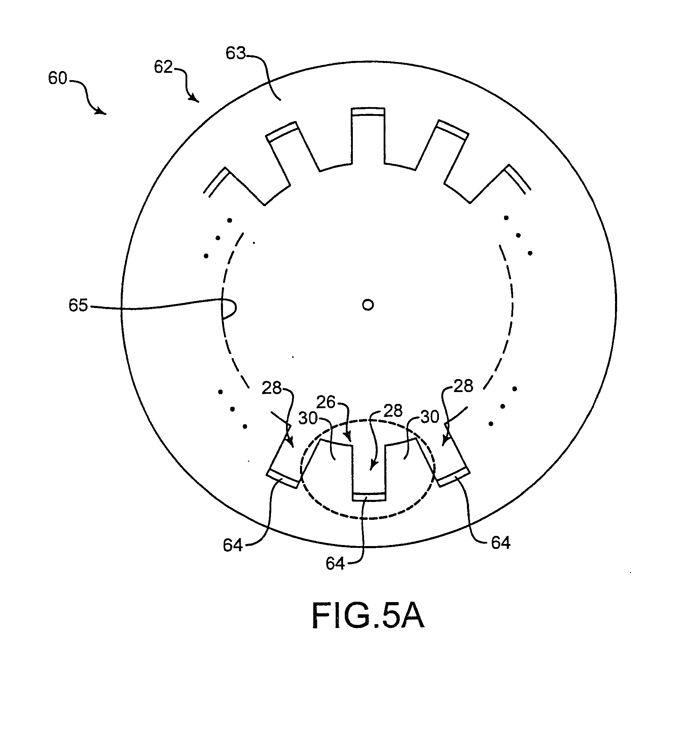

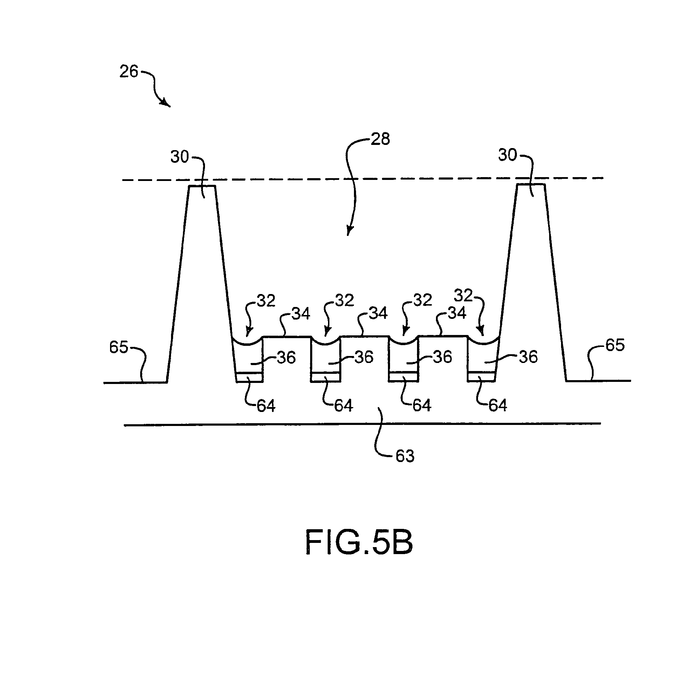

The heat pipe device 62 defines a cavity 66 therein. A surface 65 of the wall section 63 defines a surface of the cavity 66. In some examples, the nuclear fission fuel material 64 is disposed within at least a portion of the cavity 66. For example, referring additionally to FIGURES 5A and 5B, in some examples the nuclear fission fuel material 64 may be disposed within the capillary structure 26.

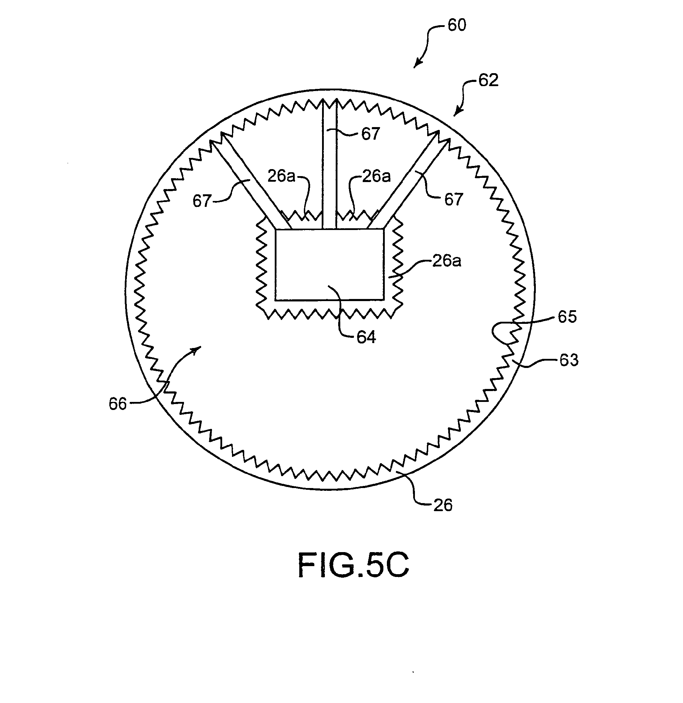

However, it will be appreciated that the nuclear fission fuel material 64 need not be disposed within the capillary structure 26 and may be disposed anywhere whatsoever within the cavity 66 as desired. As another illustrative example given without limitation and referring additionally to FIGURE 5C, in some examples the nuclear fission fuel material 64 may be disposed within the cavity 64 on one or more support structures 67 that hold the nuclear fission fuel material 64 in place. Additional capillary structure 26A is disposed about the exterior of the nuclear fission fuel material 64. At least one of the support structures 67 is a liquid transport structure, such as a channel, capillary structure, or the like, that can transport the working fluid in its liquid phase via capillary action between the capillary structure 26A disposed about the exterior of the nuclear fission fuel material 64 and the capillary structure 26 disposed about the surface of the cavity 66.

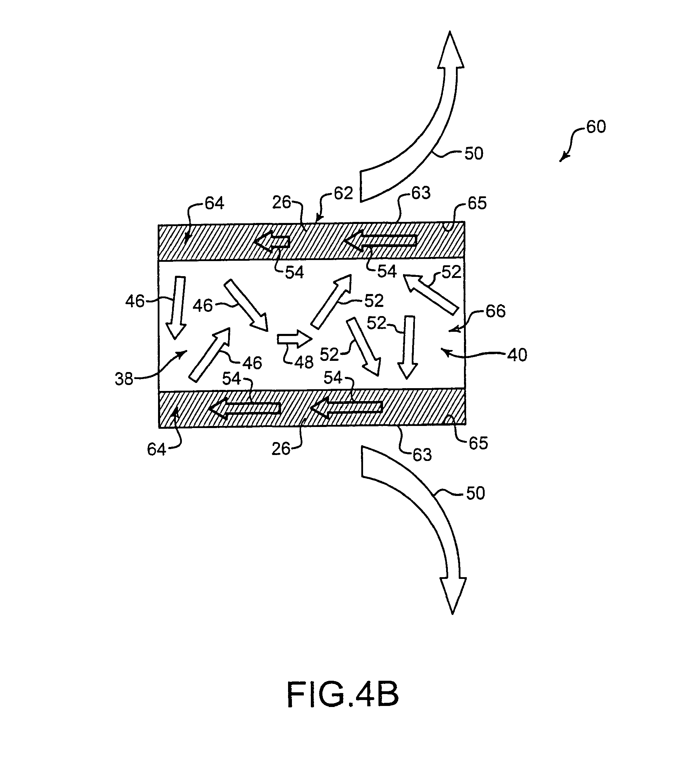

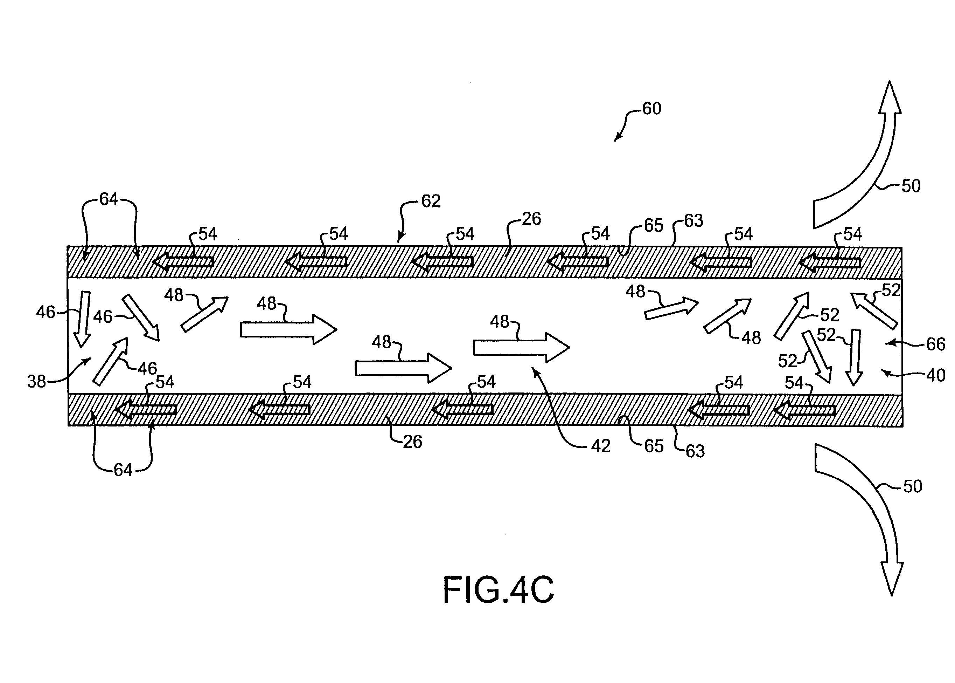

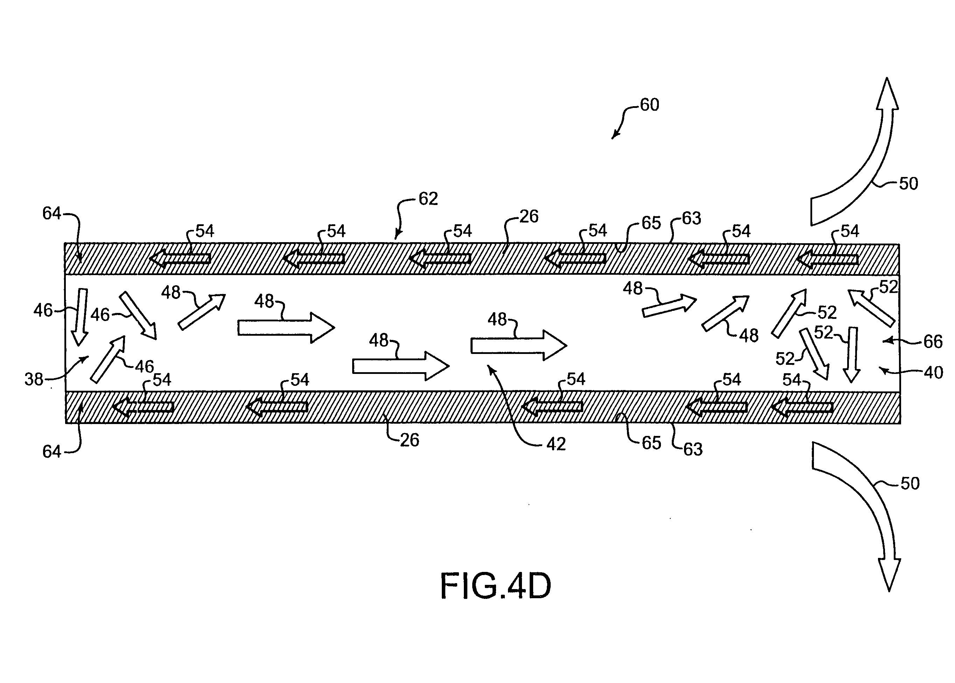

The heat pipe device 62 includes the evaporator section 38 and the condenser section 40. In some examples and as shown in FIGURES 4A and 4C, the nuclear fission fuel material 64 may be disposed entirely or substantially within the evaporator section 38. However, it will be appreciated that the nuclear fission fuel material 64 need not be disposed entirely or substantially within the evaporator section 38. To that end, in some other examples and as shown in FIGURES 4B and 4D, at least a portion of the nuclear fission fuel material 64 is not within the evaporator section 38.

In some examples given by way of non-limiting example the nuclear fission fuel material 64 may have a capillary structure. If desired, in some other embodiments the nuclear fission fuel material 64 may have a sintered powdered fuel microstructure, or a foam microstructure, or a high density microstructure, or the like.

The heat pipe device 62 includes the capillary structure 26. The capillary structure includes the grooves 28 defined in the surface 65 as described above between the lands 30. In some other examples, the capillary structure 26 may include the grooves 32 defined in the surface 65 as described above between the lands 30 and 34.

The heat pipe assembly 60 also includes the working fluid 36 as described above. Also, in some examples, the heat pipe device 62 may include the adiabatic section 42 (FIGURES 4C and 4D).

Referring now to FIGURES 4A-4D, heat from the nuclear fission fuel material 64 is transferred to the evaporator section 40. The working fluid 36 in the evaporator section 38 evaporates, as indicated by arrows 46, thereby undergoing phase transformation from a liquid to a gas. The working fluid 36 in gaseous form moves through the heat pipe device 62, as indicated by arrows 48, from the evaporator section 38, when applicable (in some embodiments) through the adiabatic section 42 (FIGURES 4C and 4D), and to the condenser section 40. At the condenser section 40, heat from the working fluid 36 is transferred out of the heat pipe device 62, as indicated by arrows 50. The working fluid 36 in the condenser section 40 condenses, as indicated by arrows 52, thereby undergoing phase transformation from a gas to a liquid. The working fluid 36 in liquid form returns from the condenser section 40 to the evaporator section 38, as indicated by arrows 54, via capillary action in the capillary structure 26. When applicable, in some examples the working fluid 36 in liquid form returns from the condenser section 40 through the adiabatic section 42 (FIGURES 4C and 4D) to the evaporator section 38.

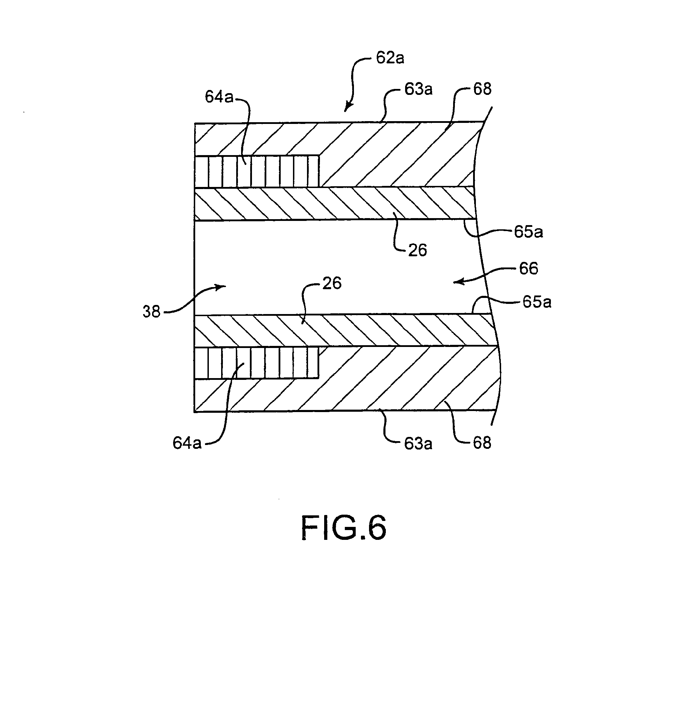

Referring additionally to FIGURE 6, in some other examples a heat pipe device 62A has a wall section 63A that includes at least one layer of structural material 68 and at least one layer of nuclear fission fuel material 64A. As such, the nuclear fission fuel material 64A can be disposed outside of the cavity 66. For sake of brevity and clarity, only one layer of the nuclear fission fuel material 64A and the structural material 68 are shown. However, it will be appreciated that, in some examples, any number of layers of the nuclear fission fuel material 64A and the structural material 68 may be provided as desired. Given by way of non-limiting example, in some examples the structural material 68 may include any one or more of materials such as steel, niobium, vanadium, titanium, a refractory metal, and/or a refractory alloy. Given by way of non-limiting example, in some examples the refractory metal may be niobium, tantalum, tungsten, hafnium, rhenium, or molybdenum. Non-limiting examples of refractory alloys include, rhenium-tantalum alloys as disclosed in U.S. patent 6902809, tantalum alloy T-111, molybdenum alloy TZM, tungsten alloy MT-185, or niobium alloy Nb-1Zr.

In some examples, a layer of the nuclear fission fuel material 64A can be disposed entirely or substantially within the evaporator section 38. However, in other examples (not shown) one or more layers of the nuclear fission fuel material 64A may be disposed in at least a portion of the adiabatic section (if provided) and/or the condenser section.

Now that illustrative examples of nuclear fission fuel elements and heat pipes have been discussed, illustrative methods associated therewith will now be discussed.

Following are a series of flowcharts depicting implementations of processes. For ease of understanding, the flowcharts are organized such that the initial flowcharts present implementations via an overall "big picture" viewpoint and thereafter the following flowcharts present alternate implementations and/or expansions of the "big picture" flowcharts as either sub-steps or additional steps building on one or more earlier-presented flowcharts. Those having skill in the art will appreciate that the style of presentation utilized herein (e.g., beginning with a presentation of a flowchart(s) presenting an overall view and thereafter providing additions to and/or further details in subsequent flowcharts) generally allows for a rapid and easy understanding of the various process implementations. In addition, those skilled in the art will further appreciate that the style of presentation used herein also lends itself well to modular design paradigms.

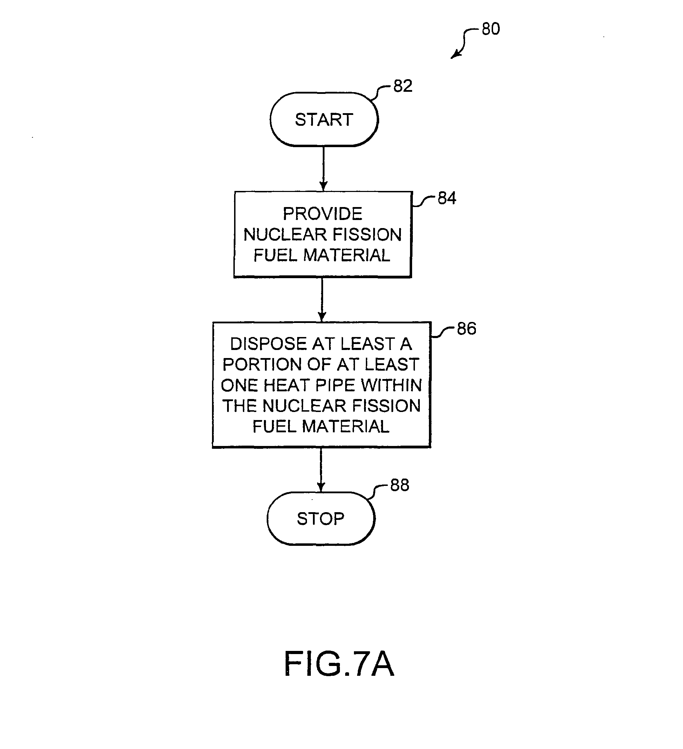

Referring now to FIGURE 7A, an illustrative method 80 is provided for fabricating a nuclear fission fuel element. The method 80 starts at a block 82. At a block 84 nuclear fission fuel material is provided. At a block 86 at least a portion of at least one heat pipe is disposed within the nuclear fission fuel material. The method 80 stops at a block 88.

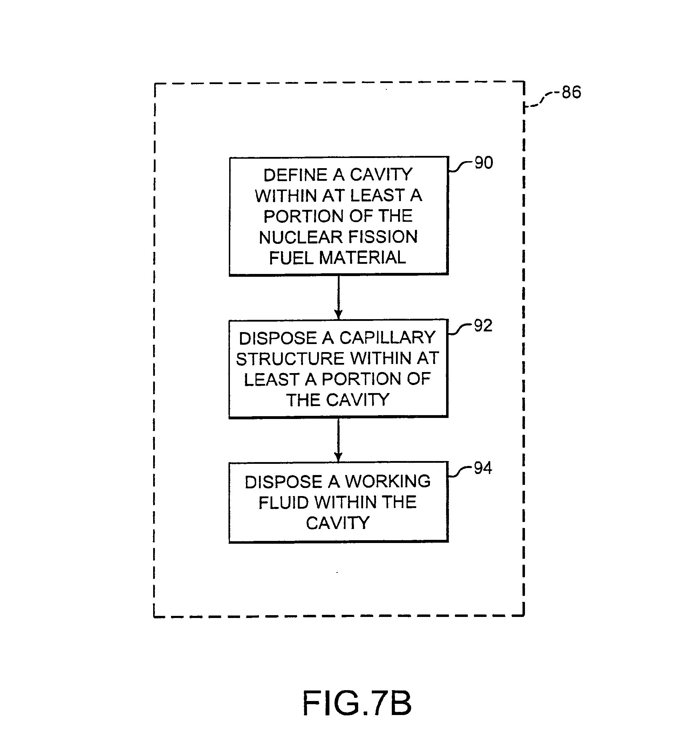

Referring now to FIGURE 7B, disposing at least a portion of at least one heat pipe within the nuclear fission fuel material at the block 86 may include further processes. For example, at a block 90 a cavity is defined within at least a portion of the nuclear fission fuel material. Also, at a block 92 a capillary structure is disposed within at least a portion of the cavity. Further, at a block 94 a working fluid may be disposed within the cavity.

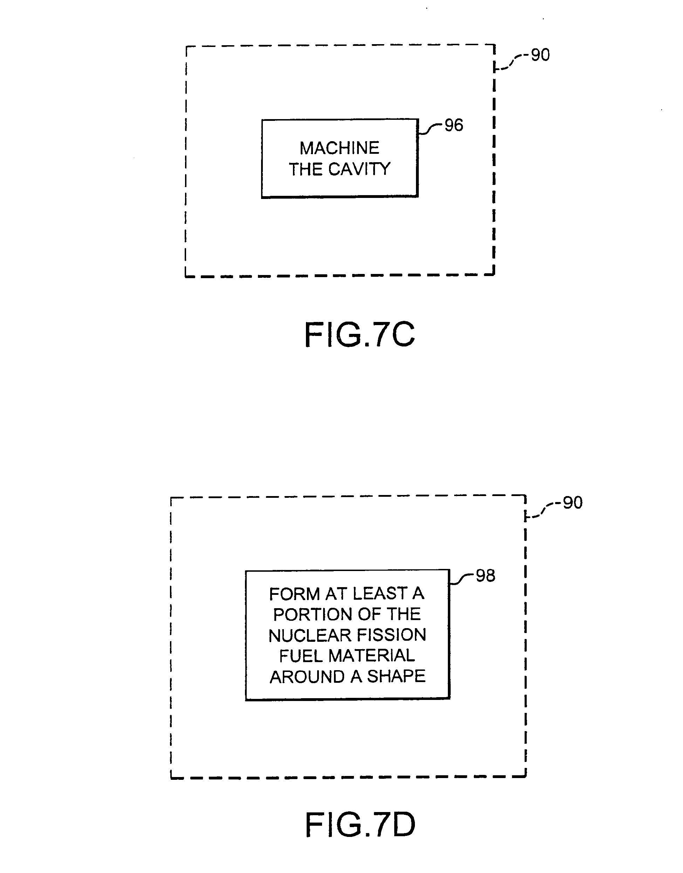

Referring now to FIGURE 7C, in some examples, defining a cavity within at least a portion of the nuclear fission fuel material at the block 90 can include machining the cavity at a block 96. Given by way of non-limiting example, machining the cavity at the block 96 can be performed by a machining operation such as drilling, milling, stamping, or the like.

Referring now to FIGURE 7D, in some other examples, defining a cavity within at least a portion of the nuclear fission fuel material at the block 90 can include forming at least a portion of the nuclear fission fuel material around a shape, such as without limitation a mandrel, at a block 98. Given by way of non-limiting example, forming can be performed by an operation such as welding, casting, electroplating, pressing, molding, or the like.

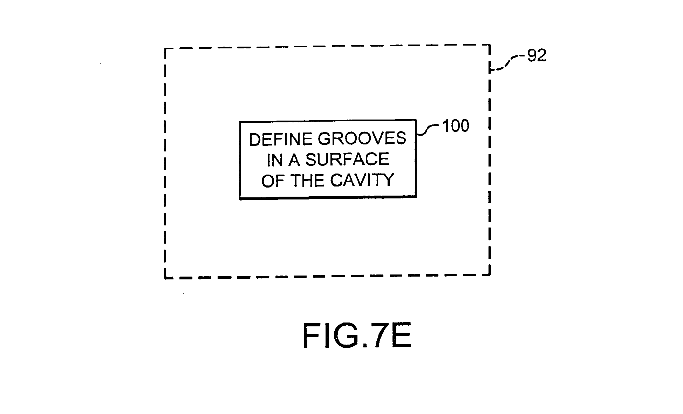

Referring now to FIGURE 7E, disposing a capillary structure within at least a portion of the cavity at the block 92 can include defining a plurality of grooves in a surface of the cavity at a block 100. Given by way of non-limiting example, defining a plurality of grooves in a surface of the cavity at the block 100 can be performed by an operation such as machining, etching, casting, stamping, or the like.

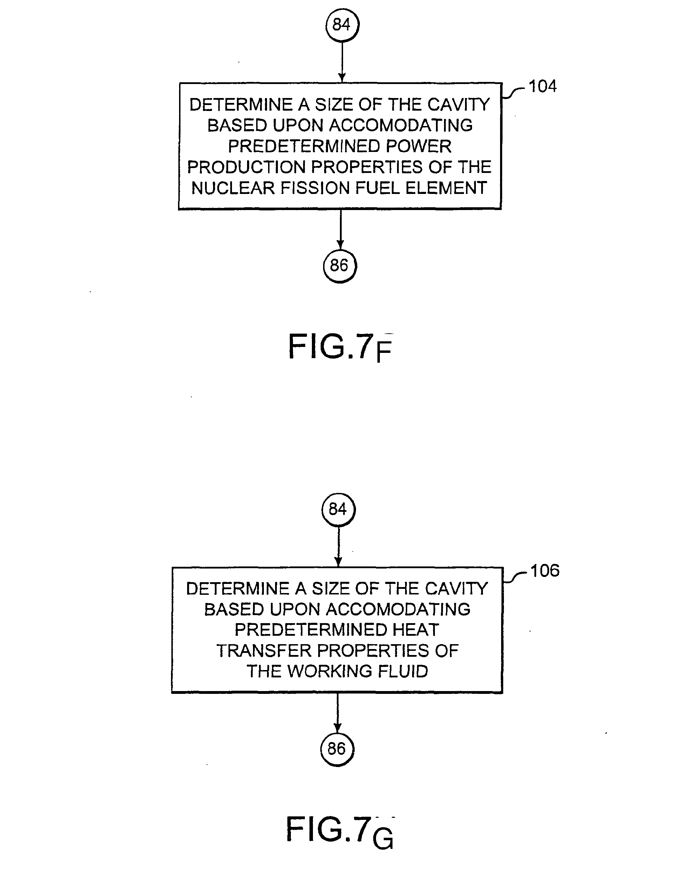

Referring now to FIGURE 7F, in some examples, before at least a portion of at least one heat pipe is disposed within the nuclear fission fuel material at the block 86, at a block 104 a size of the cavity can be determined based upon accommodating predetermined power production properties of the nuclear fission fuel element. In one example, the cross-sectional area of the cavity may be chosen by dividing a predetermined power production value of the nuclear fission fuel element by a specified axial heat flux value of the working fluid.

Referring now to FIGURE 7G, in some other examples, before at least a portion of at least one heat pipe is disposed within the nuclear fission fuel material at the block 86, at a block 106 a size of the cavity can be determined based upon accommodating predetermined heat transfer properties of the working fluid. In one example, the cross-sectional area of the cavity may be chosen in order to achieve a desirable axial heat transport capability from the heat pipe working fluid. In some examples, this selection suitably may take into account the operational vapor density of the working fluid, its latent heat of vaporization, and a desirable flow velocity or mach number. In another example, a lateral dimension of the cavity can be chosen in order to provide a desirable Reynold's number for vapor flow.

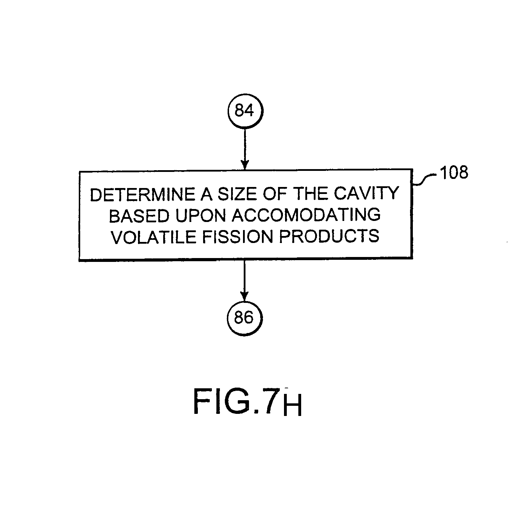

Referring now to FIGURE 7H, in some other examples, before at least a portion of at least one heat pipe is disposed within the nuclear fission fuel material at the block 86, at a block 108 a size of the cavity can be determined based upon accommodating volatile fission products. In one example, the cavity volume may be selected based upon the pressure developed by a specified amount of gaseous fission products within the volume. In another example, the cavity volume may be selected based upon the effects of the inertia of a specified amount of gaseous fission products within the volume on the heat transfer properties of the heat pipe.

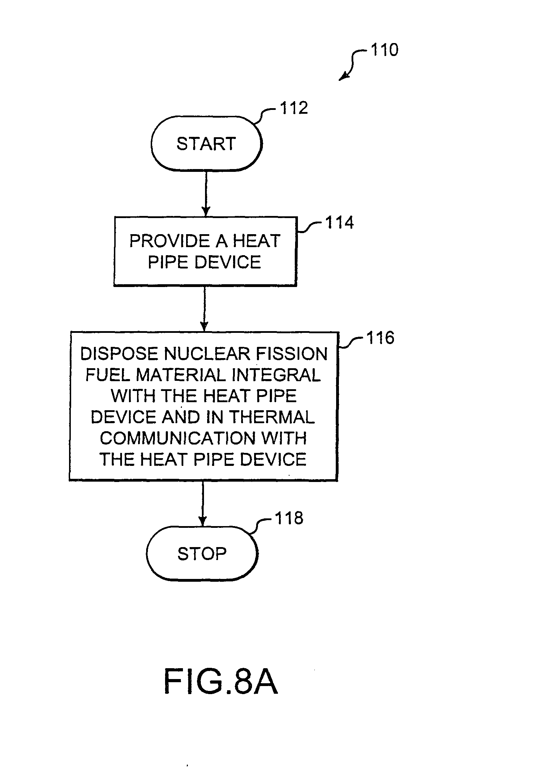

Referring now to FIGURE 8A, an illustrative method 110 is provided for fabricating a heat pipe assembly. The method 110 starts at a block 112. At a block 114 a heat pipe device is provided. At a block 116 nuclear fission fuel material is disposed integral with the heat pipe device and in thermal communication with the heat pipe device. The method 110 stops at a block 118.

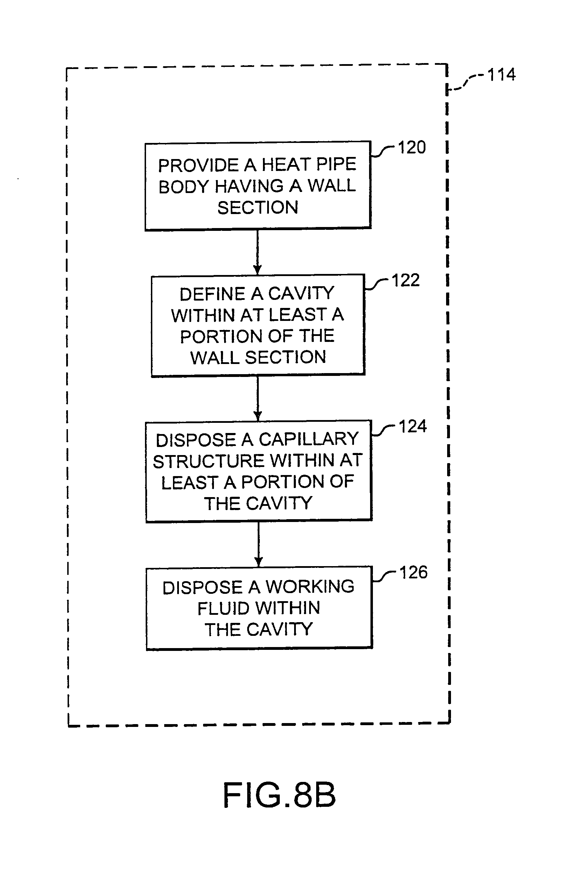

Referring now to FIGURE 8B, in some examples providing a heat pipe device at the block 114 may include further processes. For example, at a block 120 a heat pipe body having a wall section may be provided. At a block 122 a cavity may be defined within at least a portion of the wall section. Also, at a block 124 a capillary structure may be disposed within at least a portion of the cavity. Further, at a block 126 a working fluid may be disposed within the cavity.

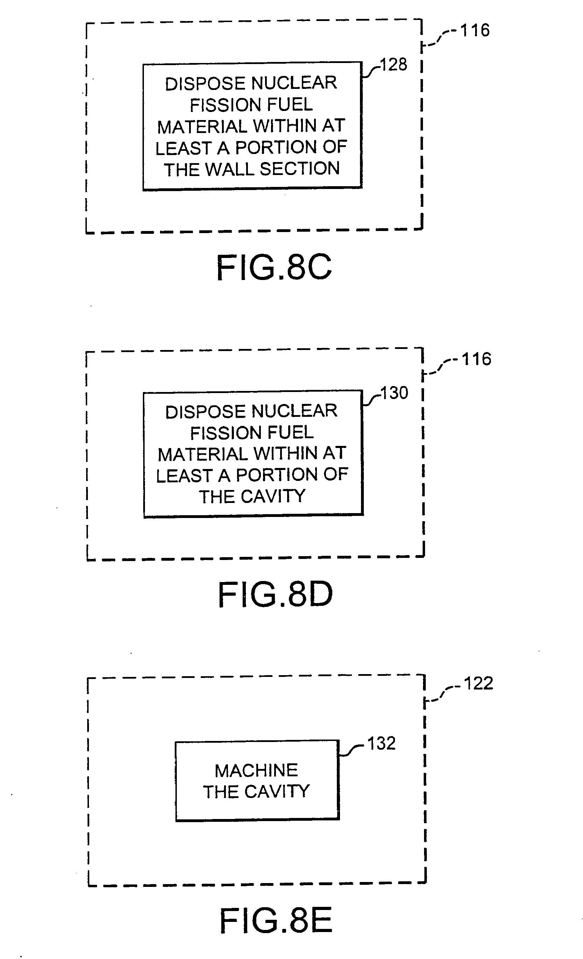

Referring now to FIGURE 8C, in some examples disposing nuclear fission fuel material in thermal communication with the heat pipe device at the block 116 may include disposing nuclear fission fuel material within at least a portion of the wall section at a block 128. Referring now to FIGURE 8D, in some other examples disposing nuclear fission fuel material in thermal communication with the heat pipe device at the block 116 may include disposing nuclear fission fuel material within at least a portion of the cavity at a block 130.

Referring now to FIGURE 8E, in some examples defining a cavity within the wall section at the block 122 may include machining the cavity. Given by way of non-limiting example, machining the cavity at the block 122 can be performed by a machining operation such as drilling, milling, stamping, or the like.

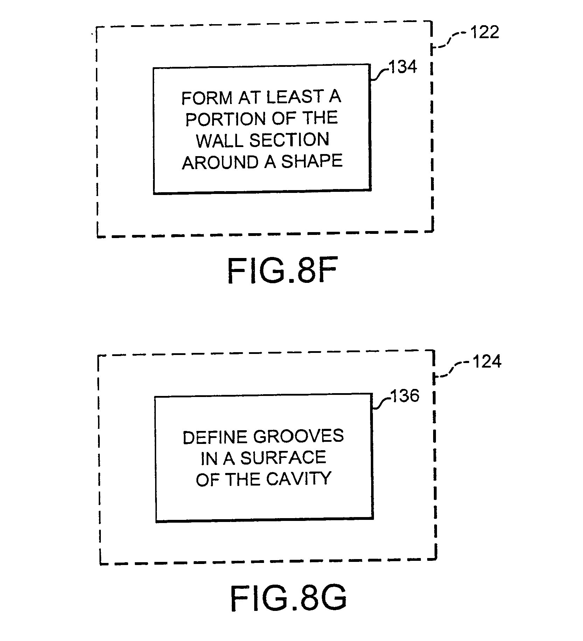

Referring now to FIGURE 8F, in some other examples defining a cavity within at least a portion of the wall section at the block 122 may include forming the at least a portion of the wall section around a shape, such as without limitation a mandrel, at a block 134. Given by way of non-limiting example, forming can be performed by an operation such as welding, casting, electroplating, pressing, molding, or the like.

Referring now to FIGURE 8G, disposing a capillary structure within at least a portion of the cavity at the block 124 includes defining a plurality of grooves in a surface of the cavity at a block 136. Given by way of non-limiting example, defining a plurality of grooves in a surface of the cavity at the block 136 can be performed by an operation such as machining, etching, casting, stamping, or the like.

One skilled in the art will recognize that the herein described components (e.g., blocks), devices, and objects and the discussion accompanying them are used as examples for the sake of conceptual clarity and that various configuration modifications are within the skill of those in the art. Consequently, as used herein, the specific exemplars set forth and the accompanying discussion are intended to be representative of their more general classes. In general, use of any specific exemplar herein is also intended to be representative of its class, and the non-inclusion of such specific components (e.g., blocks), devices, and objects herein should not be taken as indicating that limitation is desired.

With respect to the use of substantially any plural and/or singular terms herein, those having skill in the art can translate from the plural to the singular and/or from the singular to the plural as is appropriate to the context and/or application. The various singular/plural permutations are not expressly set forth herein for sake of clarity.

## Claims

1. A nuclear fission fuel element (10) comprising:
nuclear fission fuel material (12); and
at least one heat pipe (16), a portion of which is disposed within a cavity (18) defined in the nuclear fission fuel material and a portion of which is disposed outside the nuclear fission fuel material and is enclosed by a wall (24), wherein the heat pipe includes a capillary structure (26) defined within at least a portion of the cavity, wherein a wall surface (20) of the cavity defines a wall surface of the heatpipe and has a plurality of grooves (28) defined therein, the plurality of grooves defining the capillary structure.

2. The nuclear fission fuel element of Claim 1, wherein the capillary structure is further defined in the interior of the portion of the heat pipe that is outside the nuclear fission fuel material and is enclosed by the wall.

3. The nuclear fission fuel element of Claim 1 or Claim 2, wherein, wherein the cavity is sealed.

4. The nuclear fission fuel element of any one of the preceding Claims, wherein the plurality of grooves are axial grooves separated by lands (30).

5. The nuclear fission fuel element of Claim 4, wherein, within a said groove (28), additional grooves are defined separated from each other by lands (30, 34).

6. The nuclear fission fuel element of any one of the preceding Claims, further comprising a working fluid disposed within the cavity.

7. The nuclear fission fuel element of any one of the preceding Claims, wherein the heat pipe includes an evaporator section (38) and a condenser section (40).

8. The nuclear fission fuel element of Claim 7, wherein the heat pipe further includes an adiabatic section (42).

9. The nuclear fission fuel element of Claim 8, wherein at least a portion of the adiabatic section is not within the nuclear fission fuel material.

10. The nuclear fission fuel element of any one of Claims 7 to 9, wherein at least a portion of at least one of the condenser section and the evaporator section is not within the nuclear fission fuel material.

11. A method of fabricating a nuclear fission fuel element (10), the method comprising:
providing nuclear fission fuel material (12); and
disposing a portion of at least one heat pipe within the nuclear fission fuel material, a portion of the heat pipe (16) being disposed outside the nuclear fission fuel material and enclosed by a wall (24), wherein disposing the portion of at least one heat pipe within the nuclear fission fuel material includes:
defining a cavity (18)within at least a portion of the nuclear fission fuel material; and
disposing a plurality of grooves (28) in a wall surface (20) of the cavity to define a capillary structure (20) within the at least a portion of the cavity, the wall surface (20) of the cavity defining a wall surface of the heatpipe.

12. The method of Claim 11, wherein defining a cavity within at least a portion of the nuclear fission fuel material includes machining the cavity.

13. The method of Claim 11, wherein defining a cavity within at least a portion of the nuclear fission fuel material includes forming the at least a portion of the nuclear fission fuel material around a shape.

14. The method of claim 12 or claim 13, comprising forming the grooves by one of machining, etching, casting or stamping.

## Patentansprüche

1. Kernspaltungsbrennstoffelement (10), umfassend:
Kernspaltungsbrennstoffmaterial (12); und
mindestens ein Wärmerohr (16), von dem ein Teil innerhalb eines Hohlraums (18) angeordnet ist, der im Kernspaltungsbrennstoffmaterial definiert ist, und von dem ein Teil außerhalb des Kernspaltungsbrennstoffmaterials angeordnet und von einer Wand (24) umschlossen ist, wobei das Wärmerohr eine Kapillarstruktur (26) umfasst, die innerhalb von mindestens einem Teil des Hohlraums definiert ist, wobei eine Wandfläche (20) des Hohlraums eine Wandfläche des Wärmerohrs definiert und mehrere Nuten (28) hat, die darin definiert sind, wobei die mehreren Nuten die Kapillarstruktur definieren.

2. Kernspaltungsbrennstoffelement nach Anspruch 1, wobei die Kapillarstruktur ferner im Inneren des Teils des Wärmerohrs definiert ist, der außerhalb des Kernspaltungsbrennstoffmaterials liegt und von der Wand umschlossen ist.

3. Kernspaltungsbrennstoffelement nach Anspruch 1 oder 2, wobei
der Hohlraum abgedichtet ist.

4. Kernspaltungsbrennstoffelement nach einem der vorherigen Ansprüche, wobei die mehreren Nuten axiale Nuten sind, die durch Stege (30) getrennt sind.

5. Kernspaltungsbrennstoffelement nach Anspruch 4, wobei innerhalb einer Nut (28) zusätzliche Nuten definiert sind, die voneinander durch Stege (30, 34) getrennt sind.

6. Kernspaltungsbrennstoffelement nach einem der vorherigen Ansprüche, das ferner ein Arbeitsfluid umfasst, welches innerhalb des Hohlraums angeordnet ist.

7. Kernspaltungsbrennstoffelement nach einem der vorherigen Ansprüche, wobei das Wärmerohr einen Verdampferabschnitt (38) und einen Kondensatorabschnitt (40) umfasst.

8. Kernspaltungsbrennstoffelement nach Anspruch 7, wobei das Wärmerohr ferner einen adiabatischen Abschnitt (42) umfasst.

9. Kernspaltungsbrennstoffelement nach Anspruch 8, wobei mindestens ein Teil des adiabatischen Abschnitts nicht innerhalb des Kernspaltungsbrennstoffmaterials liegt.

10. Kernspaltungsbrennstoffelement nach einem der Ansprüche 7 bis 9, wobei mindestens ein Teil von mindestens einem Element aus dem Kondensatorabschnitt und dem Verdampferabschnitt nicht innerhalb des Kernspaltungsbrennstoffmaterials liegt.

11. Verfahren zum Herstellen eines Kernspaltungsbrennstoffelementes (10), wobei das Verfahren Folgendes umfasst:
Bereitstellen von Kernspaltungsbrennstoffmaterial (12); und
Anordnen eines Teils von mindestens einem Wärmerohr innerhalb des Kernspaltungsbrennstoffmaterials, wobei ein Teil des Wärmerohrs (16) außerhalb des Kernspaltungsbrennstoffmaterials angeordnet und von einer Wand (24) umschlossen ist, wobei das Anordnen des Teils von mindestens einem Wärmerohr innerhalb des Kernspaltungsbrennstoffmaterials Folgendes umfasst:
Definieren eines Hohlraums (18) innerhalb von mindestens einem Teil des Kernspaltungsbrennstoffmaterials; und
Anordnen mehrerer Nuten (28) in einer Wandfläche (20) des Hohlraums, um eine Kapillarstruktur (20) innerhalb des mindestens einen Teils des Hohlraums zu definieren, wobei die Wandfläche (20) des Hohlraums eine Wandfläche des Wärmerohrs definiert.

12. Verfahren nach Anspruch 11, wobei das Definieren eines Hohlraums innerhalb von mindestens einem Teil des Kernspaltungsbrennstoffmaterials das maschinelle Bearbeiten des Hohlraums umfasst.

13. Verfahren nach Anspruch 11, wobei das Definieren eines Hohlraums innerhalb von mindestens einem Teil des Kernspaltungsbrennstoffmaterials das Bilden des mindestens einen Teils des Kernspaltungsbrennstoffmaterials um eine Form herum umfasst.

14. Verfahren nach Anspruch 12 oder 13, das das Bilden der Nuten durch ein Element aus maschineller Bearbeitung, Ätzen, Gießen oder Stanzen umfasst.

## Revendications

1. Elément de combustible de fission nucléaire (10) comprenant :
un matériau combustible de fission nucléaire (12) ; et
au moins un caloduc (16) dont une portion est disposée à l'intérieur d'une cavité (18) définie dans le matériau combustible de fission nucléaire et dont une portion est disposée à l'extérieur du matériau combustible de fission nucléaire et est enfermée par une paroi (24), le caloduc comportant une structure capillaire (26) définie à l'intérieur d'au moins une portion de la cavité, une surface de paroi (20) de la cavité définissant une surface de paroi du caloduc et présente une pluralité de rainures (28) définies dans celle-ci, la pluralité de rainures définissant la structure capillaire.

2. Elément de combustible de fission nucléaire selon la revendication 1, dans lequel la structure capillaire est en outre définie à l'intérieur de la portion du caloduc qui est à l'extérieur du matériau combustible de fission nucléaire et qui est enfermée par la paroi.

3. Elément de combustible de fission nucléaire selon la revendication 1 ou la revendication 2, dans lequel la cavité est scellée.

4. Elément de combustible de fission nucléaire selon l'une quelconque des revendications précédentes, dans lequel la pluralité de rainures sont des rainures axiales séparées par des méplats (30).

5. Elément de combustible de fission nucléaire selon la revendication 4, dans lequel, à l'intérieur d'une dite rainure (28), des rainures supplémentaires sont définies, lesquelles sont séparées les unes des autres par des méplats (30, 34) .

6. Elément de combustible de fission nucléaire selon l'une quelconque des revendications précédentes, comprenant en outre un fluide de travail disposé à l'intérieur de la cavité.

7. Elément de combustible de fission nucléaire selon l'une quelconque des revendications précédentes, dans lequel le caloduc comporte une section d'évaporateur (38) et une section de condenseur (40).

8. Elément de combustible de fission nucléaire selon la revendication 7, dans lequel le caloduc comporte en outre une section adiabatique (42).

9. Elément de combustible de fission nucléaire selon la revendication 8, dans lequel au moins une portion de la section adiabatique ne se trouve pas à l'intérieur du matériau combustible de fission nucléaire.

10. Elément de combustible de fission nucléaire selon l'une quelconque des revendications 7 à 9, dans lequel au moins une partie d' au moins l'une de la section de condenseur et de la section d'évaporateur ne se trouve pas à l'intérieur du matériau combustible de fission nucléaire.

11. Procédé de fabrication d'un élément de combustible de fission nucléaire (10), le procédé comprenant :
fournir un matériau combustible de fission nucléaire (12) ; et
disposer une portion d'au moins un caloduc à l'intérieur du matériau combustible de fission nucléaire, une portion du caloduc (16) étant disposée à l'extérieur du matériau combustible de fission nucléaire et étant enfermée par une paroi (24), la disposition de la portion d'au moins un caloduc à l'intérieur du matériau combustible de fission nucléaire comportant :
définir une cavité (18) à l'intérieur d'au moins une portion du matériau combustible de fission nucléaire ; et
disposer une pluralité de rainures (28) dans une surface de paroi (20) de la cavité pour définir une structure capillaire (20) à l'intérieur de l'au moins une portion de la cavité, la surface de paroi (20) de la cavité définissant une surface de paroi du caloduc.

12. Procédé selon la revendication 11, dans lequel le fait de définir une cavité à l'intérieur d'au moins une portion du matériau combustible de fission nucléaire comporte d'usiner la cavité.

13. Procédé selon la revendication 11, dans lequel le fait de définir une cavité à l'intérieur d'au moins une portion du matériau combustible de fission nucléaire comporte de former l'au moins une portion du matériau combustible de fission nucléaire autour d'une forme.

14. Procédé selon la revendication 12 ou 13, comprenant le formage des rainures par usinage, gravage chimique, coulage ou estampage.
